# EUROPEAN PATENT SPECIFICATION

(11) **EP 2 503 182 B1**
(45) Date of publication and mention of the grant of the patent: **12.06.2019**
(21) Application number: 12160302.1
(22) Date of filing: 20.03.2012
(51) Int. Cl.: F16F 15/04

(54) **Vehicle comprising suspension system for compressor**
Fahrzeug mit Aufhängungssystem für einen Verdichter
Véhicule comprenant un système de suspension pour compresseur

(30) Priority: 22.03.2011 SE 1150253
(43) Date of publication of application: 26.09.2012
(73) Proprietor: Scania CV AB, 151 87 Södertälje (SE)
(72) Inventor: Friberg, Pär, SE-151 50 Enhörna (SE); Khodadad-Kucheki, Fardad, SE-151 48 Södertälje (SE); Almaliki, Mokhlos, SE-151 32 Södertälje (SE)
(74) Representative: Scania CV AB

(56) References cited:
- WO-A1-2011/021495
- CH-A5- 669 018
- CN-C- 1 094 096
- DE-A1- 3 209 966
- JP-A- 2004 197 574
- JP-A- 2007 051 666
- JP-B2- 3 382 782

## Description

### Field of the invention

The present invention relates to a vehicle comprising a compressor and a suspension system for a compressor situated close to an engine according to the preamble of the independent claim.

### Background to the invention

In vehicles, a compressor for air conditioning is often situated close to the engine. In a vehicle such as a bus, this compressor may be installed close to the chassis. The compressor is connected to the engine by a belt used to drive the compressor. Such a compressor installation is usually not configured to insulate the engine vibrations which are transmitted via the belt fitted between the engine and the compressor installation. It is therefore usual at present that the compressor is so configured that its vibrations are only insulated by medium-hard vibration insulation, i.e. relatively high setting-up frequency. As the engine vibrations also propagate to the compressor installation, they cause disturbing noise and vibrations both when the vehicle is in motion and when it is idling.

A usual way of tensioning the belt between the engine and the compressor is to provide a bellows or spring between the compressor and the ledge on which the compressor is installed. There is sometimes also a prestress in the rubber bushing via which the compressor bears upon the ledge. This means that forces in the belt transmit a moment to the compressor's vibration insulation via the bellows and the prestress in the bushing. This leads to the vibration insulators between the compressor and the chassis being subject to uneven loads, with consequent transmission of forces and further vibrations to the chassis.

One way of reducing the compressor's vibrations may be to suspend the compressor on the engine and thereby use the engine's vibration insulators to also insulate vibrations in the compressor. However, such a solution means that the engine and its insulators have also to bear the extra weight and load contributed by the compressor's weight and installation.

There is thus a problem with today's suspension of the compressor relative to the engine in a vehicle.

The object of the present invention is therefore to propose an improved suspension system for the compressor which provides assurance that the vibrations from the engine do not propagate to the compressor and the chassis.

### Summary of the invention

The above object is achieved with the invention defined by the independent claim.

Preferred embodiments are defined by the dependent claims.

The invention relates to a vehicle comprising a compressor and a suspension system for a compressor situated close to an engine pertaining to the vehicle. The vehicle is provided with a belt arranged in a belt circuit which runs over a first wheel with a first axis of rotation pertaining to the engine and a second wheel with a second axis of rotation on the compressor. The vehicle also comprises a strut which is provided with a first fastening point on the engine and a second fastening point pertaining to the compressor and which links together the engine and the compressor. The vehicle further comprises an insulator arrangement situated close to the compressor for suspension of the compressor relative to vehicle's chassis with a gentle insulating action so that the compressor's setting-up frequency is below 15 Hz in order to damp the compressor's vibrations and the vibrations which propagate from the engine. At least one break roller is provided to control the resonance of the belt.

This suspension system in a vehicle leads to substantially improved vibration insulation of the compressor. It is also a less expensive and simpler configuration than suspending the compressor on the engine.

CN 1 094 096 C shows a vehicle comprising a compressor and a suspension system for a compressor. An insulator arrangement is situated close to the compressor in order to damp the compressor's vibrations.

### Brief description of drawings

Figure 1 is a perspective view of a suspension system for a compressor situated close to an engine pertaining to a vehicle, and
Figure 2 is a side view, without belt, of a suspension system for a compressor situated close to an engine pertaining to a vehicle.

### Detailed description of preferred embodiments of the invention

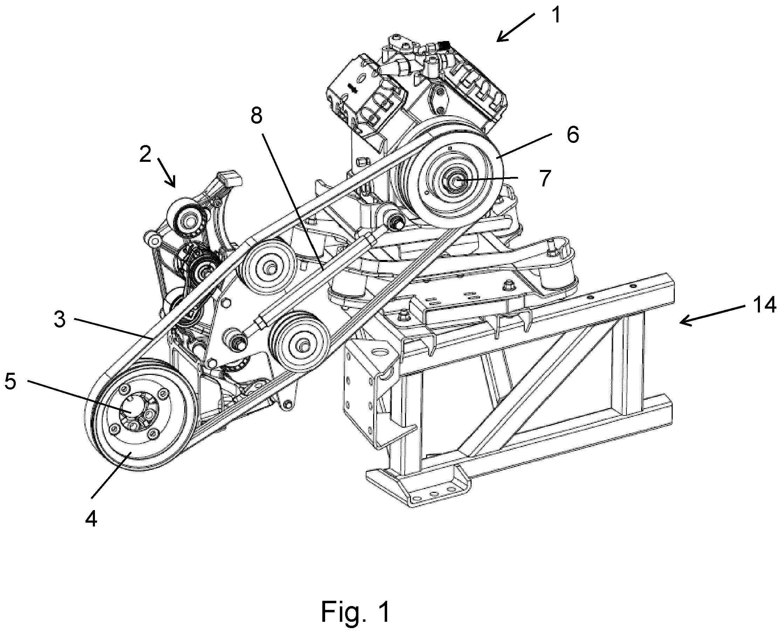

Figure 1 is a perspective view of a suspension system for a compressor 1 situated close to an engine 2 in a vehicle. The vehicle comprises a belt 3 arranged in a belt circuit which runs over a first wheel 4 with a first axis of rotation 5 pertaining to the engine and a second wheel 6 with a second axis of rotation 7 on the compressor.

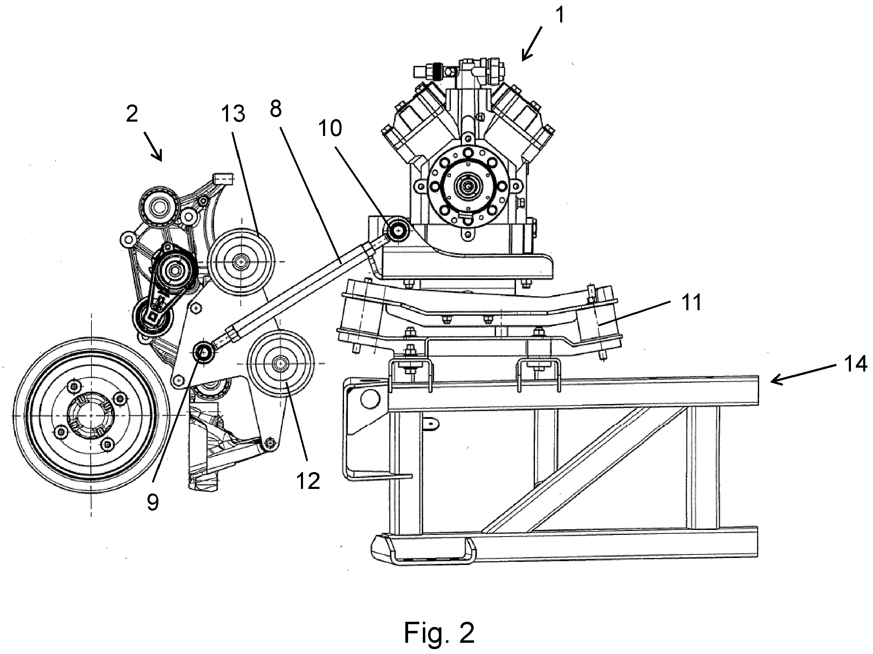

Figure 2 is a side view of the suspension system for the compressor 1 situated close to the engine 2 in a vehicle. For the sake of clarity, the belt is not depicted. As may be seen in Figure 2, the compressor is situated close to the chassis 14 with an intermediate vibration arrangement 11. The vehicle also comprises a strut 8 which is provided with a first fastening point 9 on the engine and a second fastening point 10 pertaining to the compressor and which links together the engine and the compressor installation. The strut 8 is situated within the belt circuit and is fastened rigidly at the fastening points. The fastening points 9, 10 are for example provided with bushings to allow movement about the respective fastening points at right angles to the strut's longitudinal axis.

In the embodiment depicted, a first break roller 12 and a second break roller 13 are provided to control the resonance of the belt. These rollers are preferably situated within the belt circuit. The strut is also situated symmetrically within the belt circuit. An alternative embodiment has only one break roller situated within the belt circuit to control the belt's resonance. In an alternative embodiment, the break roller or rollers may be situated outside the belt circuit in order to control the belt's resonance. In alternative embodiments, more than two or no break rollers may be used.

The strut may also be situated centrally within the belt circuit in such a way that its longitudinal axis is at right angles to the first axis of rotation 5 pertaining to the engine and is also at right angles to the second axis of rotation 7 pertaining to the compressor. The strut 8 thus absorbs forces between the compressor 1 and the engine 2, resulting in no load upon the compressor in the direction of the belt 3. As the strut is situated centrally within the belt circuit, it balances the forces and moments which are usually transmitted to the compressor via the belt. This means that only vibrations from the compressor in vertical directions need insulating, so the vibration arrangement 11 may have a gentle insulating action at low setting-up frequencies. Vibrations from the compressor in vertical directions means those due to the vertical force component of the force resultant in the strut's longitudinal axis. The force resultant in the strut is the force due to movements of the engine. This results in effective vibration insulation of the compressor 1 relative to the chassis 14.

The suspension system is thus intended to cater inter alia for force directions, rigid body movements of the compressor, forces and resonance variations in the belt and also heat and strength.

Vehicle's insulator arrangement 11 situated close to the compressor has a gentle insulating action so that the compressor installation's setting-up frequency is between 10 and 25 Hz in order to damp the compressor's vibrations and the vibrations which propagate from the engine. This is necessary in order to damp the engine's lowest vibration frequencies which propagate to the compressor. For example, the engine's lowest dominant frequencies in the case of a truck or bus might be 25 Hz, in which case the compressor's setting-up frequency should not exceed 15 Hz. It is also desirable to use a supercritical operating situation of the insulator arrangement situated close to the compressor. In a preferred embodiment, the compressor's setting-up frequency is below 15 Hz.

An insulator arrangement with gentle insulating action means that the setting-up frequency is therefore low. The compressor's setting-up frequency means setting up the lowest resonance frequency in a specific direction which is most commonly vertical. The components of this set-up which contribute to the setting-up frequency are the weight of the compressor and the rigidity of the insulator arrangement. The weight of the compressor installation is usually between 50 and 80 kg. The rigidity/hardness of the insulator arrangement is measured differently depending on what type of material it comprises. The total rigidity of so-called wirerope metal insulators is with advantage below 450 kN/m. If rubber is used, a Shore hardness of below 50 is appropriate.

The strut 8 is adjustable to allow adjustment of the compressor's position relative to the engine when the engine is not in operation. The strut may be adjusted by pneumatic, hydraulic or other conventional means. The strut may also be used as belt tensioner and be usable in belt replacement.

The insulator arrangement 11 is made of elastic material, which may comprise spirally wound metal wires, e.g. so-called wirerope insulators, or be made of rubber or plastic or some other heat-tolerant material. It may also be made of conventional spring steel. The insulator arrangement must provide assurance of good vibration insulation while at the same time tolerating great heat and being of great strength.

The number of vibration insulators in the insulator arrangement 11 may vary between different embodiments. The embodiment depicted in Figures 1 and 2 has four rubber insulators, each about 50 mm in diameter and about 40 mm high. They may also be fewer in number, e.g. only one or two vibration insulators, which will be then be placed more centrally under the compressor. If two insulators are used, their diameter and height are usually 50-100 mm. More than four or fewer than four insulators may also be used. The number of insulators and where they are positioned below the compressor will depend on the configuration of the lower part of the compressor installation, i.e. how much space there is.

The present suspension system is not restricted to being used to link together, and damp the vibrations between, the compressor and the engine, as it may also be used to damp the vibrations close to other components of a vehicle.

The present invention is not restricted to the preferred embodiments described above. Sundry alternatives, modifications and equivalents may be used. The above embodiments are therefore not to be regarded as limiting the invention's protective scope, which is defined by the attached claims.

## Claims

1. A vehicle comprising a compressor (1) and a suspension system for a compressor situated close to an engine (2) pertaining to the vehicle comprising a suspension system for the compressor (1), which vehicle comprises
- a belt (3) arranged in a belt circuit which runs over a first wheel (4) with a first axis of rotation (5) pertaining to the engine and a second wheel (6) with a second axis of rotation (7) on the compressor,
- a strut (8) which is provided with a first fastening point (9) on the engine and a second fastening point (10) pertaining to the compressor and which links together the engine and the compressor,
- an insulator arrangement (11) situated close to the compressor for suspension of the compressor relative to vehicle's chassis, which insulator arrangement (11) comprises elastic material of rubber, plastic, spring steel or spirally wound metal wires in order to damp the compressor's vibrations and the vibrations which propagate from the engine,
**characterised in that**,
the insulator arrangement (11) has a gentle insulating action depending on the weight of the compressor (1) and the rigidity of the insulator arrangement (11), so that the compressor installation's setting-up frequency is below 15 Hz and wherein at least one break roller (12) is provided to control the resonance of the belt.

2. A vehicle according to claim 1, **characterised in that** the strut is situated within the belt circuit.

3. A vehicle according to claim 2, **characterised in that** the strut is situated substantially centrally within the belt circuit in such a way that the longitudinal axis of the strut is at right angles to the first axis of rotation pertaining to the engine and at right angles to the second axis of rotation pertaining to the compressor.

4. A vehicle according to any one of the foregoing claims, **characterised in that** two break rollers (12, 13) are provided to control the resonance of the belt.

5. A vehicle according to either of claims 1 and 4, **characterised in that** the break roller or rollers is/are situated within the belt circuit.

6. A vehicle according to either of claims 4 and 5, **characterised in that** the strut is situated symmetrically within the belt circuit.

7. A vehicle according to any one of the foregoing claims, **characterised in that** the strut is adjustable to allow adjustment of the compressor's position relative to the engine.

8. A vehicle according to claim 7, **characterised in that** the strut is adjusted by pneumatic means.

9. A vehicle according to any one of the foregoing claims, **characterised in that** the number of insulators is four.

10. A vehicle according to any one of claims 1-8, **characterised in that** the number of insulators is two.

## Patentansprüche

1. Fahrzeug, umfassend einen Verdichter (1) und ein Aufhängungssystem für einen Verdichter, der sich in der Nähe eines Verbrennungsmotors (2) befindet, der zu dem Fahrzeug gehört, welches das Aufhängungssystem für den Verdichter (1) umfasst, wobei das Fahrzeug umfasst
- einen Riemen (3), der in einem Riemenkreislauf angeordnet ist, der über ein erstes Rad (4) mit einer ersten Drehachse (5), die zu dem Verbrennungsmotor gehört, und über ein zweites Rad (6) mit einer zweiten Drehachse (7) an dem Verdichter verläuft,
- eine Strebe (8), die mit einem ersten Befestigungspunkt (9) an dem Verbrennungsmotor und einem zweiten Befestigungspunkt (10), der zu dem Verdichter gehört, versehen ist und den Verbrennungsmotor und den Verdichter verbindet,
- eine Isolatoranordnung (11), die sich in der Nähe des Verdichters für die Aufhängung des Verdichters mit Bezug auf das Fahrgestellt des Fahrzeugs befindet, wobei die Isolatoranordnung (11) ein elastisches Material aus Gummi, Kunststoff, Federstahl oder spiralförmig aufgewickelten Metalldrähten umfasst, um die Schwingungen des Verdichters und die Schwingungen, die sich von dem Verbrennungsmotor aus ausbreiten, zu dämpfen,
**dadurch gekennzeichnet, dass** die Isolatoranordnung (11) in Abhängigkeit von dem Gewicht des Verdichters (1) und der Steifigkeit der Isolatoranordnung (11) eine sanfte Isolierwirkung aufweist, so dass die Einrichtungsfrequenz der Installation des Verdichters unterhalb von 15 Hz liegt, wobei mindestens eine Halterolle (12) bereitgestellt wird, um die Resonanz des Riemens zu regeln.

2. Fahrzeug nach Anspruch 1, **dadurch gekennzeichnet, dass** sich die Strebe innerhalb des Riemenkreislaufs befindet.

3. Fahrzeug nach Anspruch 2, **dadurch gekennzeichnet, dass** sich die Strebe im Wesentlichen mittig innerhalb des Riemenkreislaufs derart befindet, dass die Längsachse der Strebe im rechten Winkel zu der ersten Drehachse steht, die zu dem Verbrennungsmotor gehört, und im rechten Winkel zu der zweiten Drehachse steht, die zu dem Verdichter gehört.

4. Fahrzeug nach einem der vorhergehenden Ansprüche, **dadurch gekennzeichnet, dass** zwei Halterollen (12, 13) bereitgestellt werden, um die Resonanz des Riemens zu regeln.

5. Fahrzeug nach einem der Ansprüche 1 bis 4, **dadurch gekennzeichnet, dass** sich die Halterolle(n) innerhalb des Riemenkreislaufs befindet bzw. befinden.

6. Fahrzeug nach einem der Ansprüche 4 und 5, **dadurch gekennzeichnet, dass** sich die Strebe symmetrisch innerhalb des Riemenkreislaufs befindet.

7. Fahrzeug nach einem der vorhergehenden Ansprüche, **dadurch gekennzeichnet, dass** die Strebe anpassbar ist, um die Anpassung der Position des Verdichters mit Bezug auf den Verbrennungsmotor zu ermöglichen.

8. Fahrzeug nach Anspruch 7, **dadurch gekennzeichnet, dass** die Strebe durch Druckluftmittel anpassbar ist.

9. Fahrzeug nach einem der vorhergehenden Ansprüche, **dadurch gekennzeichnet, dass** die Anzahl der Isolatoren vier ist.

10. Fahrzeug nach einem der Ansprüche 1 bis 8, **dadurch gekennzeichnet, dass** die Anzahl der Isolatoren zwei ist.

## Revendications

1. Véhicule comprenant un compresseur (1) et un système de suspension pour un compresseur situé à proximité d'un moteur (2) appartenant au véhicule comprenant un système de suspension pour le compresseur (1), lequel véhicule comprend
- une courroie (3) disposée dans un circuit de courroie qui passe sur une première roue (4) avec un premier axe de rotation (5) relatif au moteur et une deuxième roue (6) avec un deuxième axe de rotation (7) sur le compresseur,
- un support (8) qui est muni d'un premier point de fixation (9) sur le moteur et d'un deuxième point de fixation (10) relatif au compresseur et qui relie le moteur et le compresseur,
- un agencement isolant (11) situé à proximité du compresseur pour la suspension du compresseur par rapport au châssis du véhicule, lequel agencement isolant (11) comprend un matériau élastique en caoutchouc, plastique, acier à ressort ou fils métalliques enroulés en spirale afin d'amortir les vibrations du compresseur et les vibrations qui se propagent du moteur,
**caractérisé en ce que** :
l'agencement isolant (11) a une action isolante douce en fonction du poids du compresseur (1) et de la rigidité de l'agencement isolant (11), de sorte que la fréquence de montage de l'installation de compresseur est inférieure à 15 Hz et dans lequel au moins un rouleau de freinage (12) est prévu pour contrôler la résonance de la courroie.

2. Véhicule selon la revendication 1, **caractérisé en ce que** le support se trouve dans le circuit de courroie.

3. Véhicule selon la revendication 2, **caractérisé en ce que** le support est situé sensiblement au centre du circuit de courroie de telle sorte que l'axe longitudinal du support est perpendiculaire au premier axe de rotation relatif au moteur et perpendiculaire au deuxième axe de rotation relatif au compresseur.

4. Véhicule selon l'une quelconque des revendications précédentes, **caractérisé en ce que** deux rouleaux de freinage (12, 13) sont prévus pour commander la résonance de la courroie.

5. Véhicule selon l'une ou l'autre des revendications 1 et 4, **caractérisé en ce que** le ou les rouleaux de freinage sont situés dans le circuit de courroie.

6. Véhicule selon l'une ou l'autre des revendications 4 et 5, **caractérisé en ce que** le support est situé symétriquement dans le circuit de courroie.

7. Véhicule selon l'une quelconque des revendications précédentes, **caractérisé en ce que** le support est réglable pour permettre de régler la position du compresseur par rapport au moteur.

8. Véhicule selon la revendication 7, **caractérisé en ce que** le support est réglé par des moyens pneumatiques.

9. Véhicule selon l'une quelconque des revendications précédentes, **caractérisé en ce que** le nombre d'isolateurs est de quatre.

10. Véhicule selon l'une quelconque des revendications 1-8, **caractérisé en ce que** le nombre d'isolateurs est de deux.
